(19) Europäisches Patentamt
European Patent Office
Office européen des brevets

(11) **EP 2 764 946 A1**

(12) **EUROPEAN PATENT APPLICATION**
published in accordance with Art. 153(4) EPC

(43) Date of publication:
**13.08.2014   Bulletin 2014/33**

(51) Int Cl.:
***B23K 9/025*** *(2006.01)*      ***B21C 37/08*** *(2006.01)*
***B23K 9/18*** *(2006.01)*        ***B23K 9/23*** *(2006.01)*
***C22C 38/00*** *(2006.01)*       ***C22C 38/58*** *(2006.01)*
***B23K 101/06*** *(2006.01)*      ***B23K 103/04*** *(2006.01)*

(21) Application number: **12838033.4**

(22) Date of filing: **03.10.2012**

(86) International application number:
**PCT/JP2012/006332**

(87) International publication number:
**WO 2013/051249 (11.04.2013 Gazette 2013/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2011   JP 2011219081**

(71) Applicant: **JFE Steel Corporation
Tokyo 100-0011 (JP)**

(72) Inventors:
• **TANIZAWA, Akihiko
  Tokyo 100-0011 (JP)**
• **OTA, Yoshiaki
  Tokyo 100-0011 (JP)**
• **UCHITOMI, Noriaki
  Tokyo 100-0011 (JP)**
• **OKATSU, Mitsuhiro
  Tokyo 100-0011 (JP)**
• **NISHIMURA, Kimihiro
  Tokyo 100-0011 (JP)**

(74) Representative: **Grünecker, Kinkeldey,
Stockmair & Schwanhäusser
Leopoldstrasse 4
80802 München (DE)**

(54) **WELDED STEEL PIPE WITH EXCELLENT WELDING HEAT-AFFECTED ZONE TOUGHNESS, AND PROCESS FOR PRODUCING SAME**

(57)    It is an object to provide a welded steel pipe which is excellent in productivity and which has excellent welded heat-affected zone toughness without deteriorating the internal quality of welds.

A welded steel pipe with excellent welded heat-affected zone toughness includes a butt weld formed by prior welding either an inner surface or an outer surface with a single layer for each of the inner and outer surfaces, wherein in the metallographic structure of a welded heat-affected zone, the martensite-austenite constituent (MA) area fraction is 4% or less, the average prior-austenite grain size is 400 $\mu$m or less, and the following items are taken into account: the average prior-austenite grain size of a welded heat-affected zone formed by prior welding, the average prior-austenite grain size of a welded heat-affected zone formed by subsequent welding, the bead width determined at a position 5 mm apart from the tip of a weld bead formed by subsequent welding, the fusion line tilt angle of a weld bead of prior welding, and the fusion line tilt angle of a weld bead of subsequent welding.

EP 2 764 946 A1

## Description

Technical Field

The present invention relates to a welded steel pipe which is manufactured in such a way that a steel plate is formed into a cylinder by cold bending and abutting surfaces thereof are welded, which is suitable as a line pipe for natural gas or crude oil, and which has excellent welded heat-affected zone toughness.

Background Art

High-strength, heavy-walled line pipes have been increasingly used to transport natural gas or crude oil year by year for the purpose of achieving an increase in transportation efficiency by high pressure operation. In sub-sea pipeline systems for transporting natural gas, more heavy-walled line pipes are required with an increase in laying depth from the viewpoint of ensuring buckling resistance during laying, water pressure strength during operation, and safety against currents.

On the other hand, in the case of using line pipes laid on the seabed at high pressure, gas is adiabatically depressurized during shutdown and, as a result, the temperature of pipe bodies may possibly decrease. Thus, the line pipes laid on the seabed are frequently required to keep toughness at a temperature lower than a service temperature based on the temperature of the sea. However, it is difficult to ensure the toughness of a welded heat-affected zone because the increase in wall thickness of a pipe increases the amount of an added alloying element necessary to ensure strength and also increases the welding heat input required for seams.

As described above, in the line pipes laid on the seabed, it is extremely difficult to ensure the toughness of the welded heat-affected zone at service temperature.

In order to cope with such a problem, Patent Literatures 1 and 2 disclose a method for ensuring the toughness of a welded heat-affected zone in such a way that the multi-pass welding of an inner surface with one or two layers and an outer surface with two layers or the inner surface with a single layer and the outer surface with three layers is performed although the butt welding of inner and outer surfaces with a single layer is usually performed and the welding heat input of each weld is thereby reduced. Patent Literatures 3 and 4 disclose a method for ensuring the toughness of a welded heat-affected zone in such a way that welding is stabilized by grinding and smoothing a tack-welded portion. Patent Literature 5 discloses a method for ensuring the toughness of a welded heat-affected zone in such a way that inner and outer surfaces are welded with a tack weld left such that the weld cross-sectional area is reduced and, as a result, the welding heat input is reduced.

Patent Literature 6 discloses a method for ensuring the toughness in such a way that the optimization of chemical compositions of a welded heat-affected zone and the increase of the cooling rate are combined such that the microstructure of the welded heat-affected zone has high toughness. Patent Literatures 7 and 8 disclose a technique for enhancing the toughness of a welded heat-affected zone in such a way that deep penetration is ensured with low heat input using a wire with a diameter less than usual and the welding heat input is thereby reduced.

Furthermore, Patent Literatures 9 and 10 each disclose a method for ensuring the toughness of a welded heat-affected zone by optimally controlling the bead width and the bead section area. Patent Literature 11 discloses a method for improving the toughness of a heat-affected zone including an ICCGHAZ (inter-critical coarse grain heat-affected zone that is a region formed by heating a welded heat-affected zone, formed near a fusion line by prior welding, composed of coarse grains to $Ac_1$ to $Ac_3$ transformation temperatures by subsequent welding), formed near a cross bond, by controlling the balance in heat input between inner and outer surfaces and the upper limit of the heat input of the inner surface depending on the wall thickness. Patent Literature 12 discloses a technique for improving the toughness of a heat-affected zone including an ICCGHAZ, formed near a cross bond, by controlling the tilt angle of a bead and the size of austenite grains in a welded heat-affected zone formed by welding inner and outer surfaces.

Citation List

Patent Literature

PTL 1: Japanese Unexamined Patent Application Publication No. 6-328255

PTL 2: Japanese Unexamined Patent Application Publication No. 10-277744

PTL 3: Japanese Unexamined Patent Application Publication No. 8-57642

PTL 4: Japanese Unexamined Patent Application Publication No. 2003-136130

PTL 5: Japanese Unexamined Patent Application Publication No. 2001-113374

PTL 6: Japanese Unexamined Patent Application Publication No. 2004-99930

PTL 7: Japanese Unexamined Patent Application Publication No. 2006-272377

PTL 8: Japanese Unexamined Patent Application Publication No. 2007-268564

PTL 9: Japanese Unexamined Patent Application Publication No. 2009-214127

PTL 10: Japanese Unexamined Patent Application Publication No. 2009-233679

PTL 11: Japanese Unexamined Patent Application Publication No. 2009-241128

PTL 12: Japanese Unexamined Patent Application Publication No. 2009-202167

Summary of Invention

Technical Problem

However, increasing the number of layers for butt welding as disclosed in Patent Literatures 1 and 2 and grinding a tack-welded portion as disclosed in Patent Literatures 3 and 4 both cause an increase in man-hour, leading to a problem with a significant reduction in productivity.
Welding with a tack weld left as disclosed in Patent Literature 5 needs to pay attention to ensuring the toughness of the tack weld and reducing weld defects. In order to achieve the reduction in welding speed of the tack weld or a tack weld metal with high toughness, it is necessary to select a combination of welding materials; hence, the feasibility of this technique is difficult. Standards, such as API (American Petroleum Institute) standards, applied to line pipes specify that seam welding needs to be performed such that no tack weld is left and therefore these techniques cannot be used to manufacture products meeting the standards.
Patent Literature 6 has an object to allow a heat-affected zone to have a high-toughness microstructure by controlling compositions and the welding heat input. However, the application of the object to a heavy-walled material requires an increase in welding heat input. It is difficult to obtain a desired heat-affected zone having a high-toughness microstructure.

A method for reducing the welding heat input using a small-diameter wire as disclosed in Patent Literatures 7 and 8 is effective for a CGHAZ (coarse grain HAZ; coarse grain heat-affected zone) formed by single-run welding. However, it is difficult for this method to ensure the toughness of an ICCGHAZ formed by two-run welding because sufficient toughness is not achieved only by the reduction in the welding heat input.
Patent Literatures 9 and 10 also have an object to reduce the welding heat input. However, this is difficult to ensure the toughness of an ICCGHAZ. In Patent Literatures 11 and 12, not only the toughness of a CGHAZ but also the toughness of an ICCGHZ can be ensured by controlling the balance in heat input between inner and outer surfaces and the tilt angle of a bead. However, a method for ensuring the toughness of the ICCGHAZ is a technique aiming principally to excessively reduce the welding heat input of inner and outer surfaces. Performing such welding promotes the occurrence of weld defects and the like and therefore is inadvisable.
Therefore, in order to solve the above problems, it is an object of the present invention to provide a welded steel pipe which is excellent in productivity and which has excellent welded heat-affected zone toughness without deteriorating the internal quality of welds.

Solution to Problem

The inventors have welded inner and outer surfaces with a single layer in the longitudinal direction of a welded pipe in order to ensure high productivity. In addition, the inventors have carried out various investigations on microstructures and weld penetration shapes capable of obtaining excellent welded heat-affected zone toughness in tack welds including soundly welded portions without grinding the tack welds and investigations on steel compositions and welding conditions for achieving the microstructures and weld penetration shapes.
Incidentally, the present invention is directed to high-strength, heavy-walled line pipes laid principally on the seabed.

Therefore, a technique for evaluating the welded heat-affected zone toughness is a method for a Charpy test specified in DNV-OS-F101.

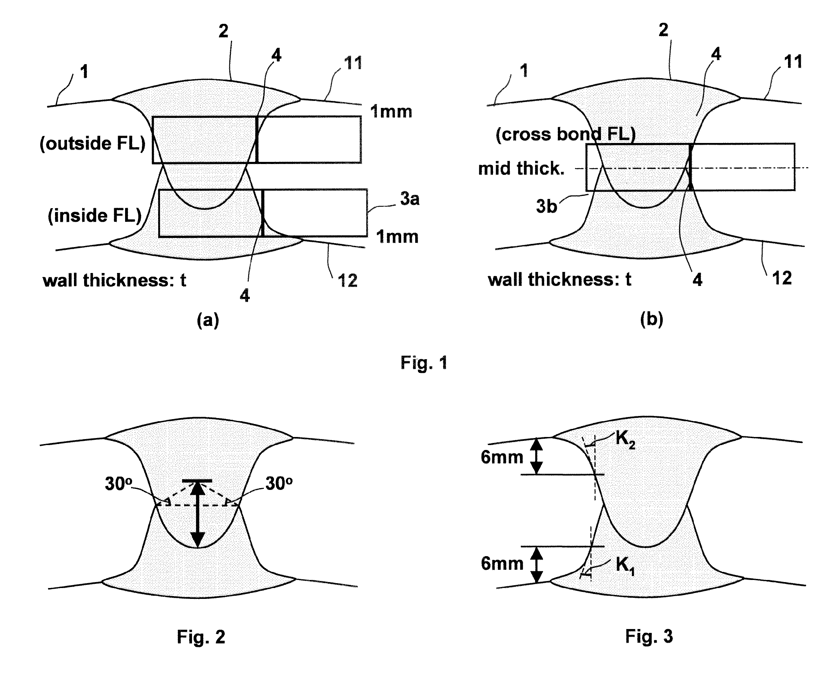

The inventors have tested an inside FL (fusion line) notch, outside FL notch, and cross bond FL notch shown in Fig. 1, the inside, outside, and cross bond FL notches being known to be particularly difficult to ensure the toughness of a welded heat-affected zone by the Charpy test as required in DNV-OS-F101, and have identified a microstructure causing fracture initiation. As a result, in the inside FL notch, fracture has occurred from a coarse grain microstructure region, referred to as a CGHAZ, located near an FL. Furthermore, the inventors have observed the microstructure of fracture initiation sites in detail and have found that the fracture initiation sites correspond to sites where chemical compositions are concentrated to cause micro-segregation and a large number of the fracture initiation sites are formed and crowded between laths of bainite in which a hard second phase referred to as a martensite-austenite constituent (MA) is a parent phase.

The inventors have also investigated the cross bond FL notch for fracture initiation. The inventors have found that a fracture initiation site is a region where the microstructure of the CGHAZ, which is referred to as an ICCGHAZ, is reheated up to two phases by the thermal effect of subsequent welding. In addition, the investigation of the microstructure thereof in detail has showed that an ICCGHAZ causing fracture initiation has a large number of MAs formed in a CGHAZ to grain boundaries and fracture initiation sites agree with micro-segregation sites similarly to the outside FL in many cases.

Therefore, the inventors have carried out investigations to ensure the toughness by improving the microstructure of a HAZ. Refining the prior-austenite grain size after suffering welding thermal history and reducing the MAs are effective in improving the toughness of the HAZ from features of the above-mentioned microstructure. The inventors have found that the addition of a small amount of Ti and the reduction in the welding heat input are effective in refining the prior-austenite grain size. On the other hand, the inventors have found that the reduction of C, which has the effect of reducing the total amount of hard second phases, is effective in reducing the MAs and the reduction of alloying elements is effective in reducing the predisposition of the MAs to become hard second phases.

In addition, among the alloying elements, Si, Al, and Nb significantly contribute particularly to the effect. While the effect of P to reduce the MAs is slight, the occurrence of micro-segregation is suppressed by the reduction of P and regions where the MAs are crowed can be reduced. As a result, the inventors have obtained a finding that the welded heat-affected zone toughness can be improved.

On the basis of these findings, the inventors have found that PMA which is defined by Equation (5) below and which takes into account functions of each alloying element and the effect of the alloying element on the formation of the MAs is an index of the welded heat-affected zone toughness. That is, the inventors have found that adjusting the PMA to 5.0 or less is capable of suppressing the formation of the MAs in a welded heat-affected zone to significantly enhance the toughness. Incidentally, the PMA is a parameter derived from the degree of formation of the MAs in the welded heat-affected zone. The inventors have confirmed that the PMA is preferably low in order to enhance the toughness of the welded heat-affected zone.

It has found that the toughness can be improved in such a way that wide inside and outside bead tilt angles are taken for a Charpy test for inside and outside FL notches as disclosed in Patent Literature 12.

Taking the above measures is capable of ensuring the toughness of the inside and outside FL notches and is, however, insufficient for a cross bond FL. A cause thereof rests on the toughness of an ICCGHAZ itself. Even if the above measures are taken, the improvement in toughness of the ICCGHAZ is small and, as a result, the toughness of the cross bond FL cannot be stably ensured.

Therefore, the inventors have subsequently investigated methods for stably obtaining high toughness for cross bond FL notches. As a result, the inventors have found that the toughness of a cross bond FL notch is significantly affected by the length of an ICCGHAZ that occupies the bottom of the notch and the reduction in length of the ICCGHAZ reduces the probability of the occurrence of low toughness. Therefore, the inventors have subsequently investigated the welding heat input and the shape of a weld bead for reducing the length of an ICCGHAZ formed near a cross bond. As a result, the inventors have found that in the case of performing inside welding and then outside welding for two layers, the length of an ICCGHAZ can be reduced by three operations: the reduction in total heat input of inner and outer surfaces, the reduction of a lap (the length of an overlap of an inside weld and an outside weld in a wall thickness direction), and the increase in bead width of an inside weld. Equations (1) and (6), which give PLBZM and PLBZS, respectively, below, are those prepared on the basis of these results. The inventors have found that the reduction in values calculated by these equations is capable of reducing the length of an ICCGHAZ and is capable of stabilizing the toughness of a cross bond FL notch.

The present invention has been made on the basis of the obtained findings in addition to further investigations.

[1] A welded steel pipe with excellent welded heat-affected zone toughness includes a butt weld formed by prior welding either an inner surface or an outer surface with a single layer for each of the inner and outer surfaces, wherein in the metallographic structure of a welded heat-affected zone, the martensite-austenite constituent (MA) area fraction is 4% or less, the average prior-austenite grain size is 400 $\mu$m or less, PLBZM calculated by the following equation (1) is 1,400 or less, $CM_1$ calculated by the following equation (2) is 13 or less, and $CM_2$ calculated by the following equation (3) is 13 or less:

$$PLBZM = 1.62D_1t + 0.84D_2t - 39t - 89R_1 + 81L + 1510 \qquad \text{Equation (1)}$$

$$CM_1 = 0.0012(90 - (K_1 + 15))D_1 \qquad \text{Equation (2)}$$

$$CM_2 = 0.0012(90 - (K_2 + 15))D_2 \qquad \text{Equation (3)}$$

where $D_1$ ($\mu$m) is the average prior-austenite grain size of a welded heat-affected zone formed by prior welding, $D_2$ ($\mu$m) is the average prior-austenite grain size of a welded heat-affected zone formed by subsequent welding, $R_1$ (mm) is the bead width determined at a position 5 mm apart from the tip of a weld bead formed by subsequent welding, L (mm) is the lap of inside and outside welds, t (mm) is the wall thickness, $K_1$ (°) is the fusion line tilt angle of a weld bead of prior welding, and $K_2$ (°) is the fusion line tilt angle of a weld bead of subsequent welding.

[2] In the welded steel pipe with excellent welded heat-affected zone toughness specified in [1], a chemical composition of the welded steel pipe contains 0.03% to 0.08% C, 0.01% to 0.20% Si, 1.0% to 2.2% Mn, 0.015% or less P, 0.001% to 0.05% Al, 0.005% to 0.050% Nb, 0.005% to 0.030% Ti, and 0.0020% to 0.0080% N and further contains one or more selected from the group consisting of 0.10% to 0.50% Cu, 0.10% to 1.00% Ni, 0.10% to 0.40% Cr, 0.10% to 0.30% Mo, 0.005% to 0.030% V, and 0.0005% to 0.0030% B on a mass basis, the remainder being Fe and inevitable impurities; Ceq given by the following equation (4) satisfies the inequality $0.30 \le Ceq \le 0.50$; and PMA given by the following equation (5) is 5.0 or less:

$$Ceq = C + Mn / 6 + (Cu + Ni) / 15 + (Cr + Mo + V) / 5 \qquad \text{Equation (4)}$$

$$PMA = 100000(C - 0.0218)(0.2Si + 0.5Al)(2(C + Si / 30 + Mn / 20 + Cu / 20 + Ni / 60 + Cr / 20 + Mo / 15 + V / 10 + 5B) + 2.5Nb)(10 / (50P + 2.5))^{-2} \qquad \text{Equation (5)}$$

where each element symbol in the right-hand sides of the equations represents the content (mass percent) thereof.

[3] The welded steel pipe with excellent welded heat-affected zone toughness specified in [2] further contains one or more selected from the group consisting of 0.0005% to 0.0100% Ca, 0.0005% to 0.0100% Mg, 0.0005% to 0.0200% of a REM, and 0.0005% to 0.0300% Zr on a mass basis.

[4] A method for manufacturing a welded steel pipe with excellent welded heat-affected zone toughness specified in any one of [1] to [3] includes prior welding of either an inner surface or an outer surface with a single layer for each of the inner and outer surfaces by submerged arc welding with multiple wire electrodes, wherein PLBZS given by the following equation (6) is 1,400 or less, $CS_1$ calculated from the following equation (7) is 16 or less, and $CS_2$ calculated from the following equation (8) is 16 or less:

$$PLBZS = 135HI_1 + 70HI_2 - 39t - 89R_1 + 81L + 1510 \qquad \text{Equation (6)}$$

$$CS_1 = (90 - (K_1 + 15))HI_1 / t \qquad \text{Equation (7)}$$

$$CS_2 = (90 - (K_2 + 15))HI_2 / t \qquad \text{Equation (8)}$$

where, $HI_1$ (kJ/mm) is the welding heat input of prior welding, $HI_2$ (kJ/mm) is the welding heat input of subsequent welding, $R_1$ (mm) is the bead width determined at a position 5 mm apart from the tip of a weld bead of prior welding, L (mm) is the lap of inside and outside weld beads, t (mm) is the wall thickness, $K_1$ (°) is the fusion line tilt angle of the weld bead of prior welding, and $K_2$ (°) is the fusion line tilt angle of a weld bead of subsequent welding.

[5] In the method for manufacturing the welded steel pipe with excellent welded heat-affected zone toughness specified in [4], in submerged arc welding with multiple wire electrodes for the subsequent welding, at least one welding wire with a diameter of 3.5 mm or less is used as a first electrode.

[6] In the method for manufacturing the welded steel pipe with excellent welded heat-affected zone toughness specified in [4] or [5], the shape of a groove on the side to perform the subsequent welding is a double-bevel groove shape having a surface-side groove angle of 90° or more and a wall thickness center-side groove angle of 60° or less.

[7] In the method for manufacturing the welded steel pipe with excellent welded heat-affected zone toughness specified in [6], the depth of a surface-side groove on the side to perform the subsequent welding is one-third or more of the wall thickness.

Advantageous Effects of Invention

According to the present invention, a welded steel pipe, having excellent welded heat-affected zone toughness, for line pipes can be manufactured with high productivity at low cost. This is highly effective for industrial purposes. Brief Description of Drawings

[Fig. 1] Fig. 1 is an illustration showing locations where Charpy V-notch specimens are taken.
[Fig. 2] Fig. 2 is an illustration showing a method for measuring the lap.
[Fig. 3] Fig. 3 is an illustration showing the angle of an inside or outside FL.

Description of Embodiments

Embodiments of the present invention are described below in detail.
A steel plate used to manufacture a welded steel pipe according to [1] of the present invention is not particularly limited and is preferably subjected to accelerated cooling or direct quenching and tempering in addition to controlled rolling in the case of manufacturing an X70 or X80 high-strength line pipe such that the strength and toughness thereof are ensured. In the present invention, the shape of a weld of the welded steel pipe and the microstructure of a heat-affected zone are specified. Reasons for limiting them are described below.

PLBZM (Equation (1)) and PLBZS (Equation (6)): 1,400 or less
PLBZM and PLBZS are both an index of the length of an ICCGHAZ formed near a cross bond. The less the values are, the less the length of the ICCGHAZ is and the more the toughness of a cross bond FL is enhanced. However, the excessive reduction in PLBZM and PLBZS leads to an excessive reduction in welding heat input or a reduction in lap to promote the occurrence of weld defects.

PLBZM is defined by the following equation (1):

$$PLBZM = 1.62D_1t + 0.84D_2t - 39t - 89R_1 + 81L + 1510 \qquad \text{Equation (1)}$$

where $D_1$ (μm) is the average prior-austenite grain size of a welded heat-affected zone formed by prior welding and $D_2$ (μm) is the average prior-austenite grain size of a welded heat-affected zone formed by subsequent welding. $D_1$ and $D_2$ can be measured by a method below. The average prior-austenite grain size of each welded heat-affected zone refers to the average equivalent circle diameter calculated from ten or more prior-austenite grains in contact with a fusion line in a cross section of a weld. The measurement method is as follows: a sample for microscopic-observation is taken from a seam weld as observed in a welding longitudinal direction; an observation surface thereof is polished, is etched by an etching process capable of revealing prior-austenite grains in a steel material using nital or picric acid, and is photographed using an optical microscope; the area of each prior-austenite grain in the photograph is measured; and the equivalent circle diameter is then determined. The measurement method is that the size of prior-austenite grains in a cross section is determined; hence, in the case of a grain size of about 50 $\mu$m to 500 $\mu$m contemplated by the present invention, the error from the actual grain size is slight. It is well known that the finer the prior-austenite grains are, the finer the internal microstructure thereof is and the more the toughness is enhanced.

$R_1$ (mm) is the bead width determined at a position 5 mm apart from the tip of a weld bead of prior welding. The above-mentioned micro-sample is used for measurement. Basically, a more correct value is obtained by determining the diameter of the bead tip on the assumption that the bead tip is circular. However, this way causes a large error depending on a measurer or requires the use of special image-processing PC software. Therefore, for convenient measurement, the bead width is determined at a position 5 mm apart from the bead tip.

L (mm) is the lap of inside and outside welds. The lap is the length of an overlap of an inside weld and an outside weld in a wall thickness direction. A measurement method is as follows: the distance between the bottom of an outside weld bead and the bottom of an inside weld bead is measured using the above-mentioned microscopic-sample as shown in Fig. 2. In this operation, since the bottom of the inside weld bead is fused with the outside weld bead and therefore cannot be localized, the lap is defined as the distance, in the wall thickness direction, between the bottom of the outside weld bead and a point forming a 60-degree corner of a right-angled triangle having a 30-degree corner and a base interposed between both right and left points (referred to as roots) where the inside weld bead is fused with the outside weld bead. The less the lap of the inside and outside welds is, the smaller the area of an ICCGHAZ formed near a cross bond is and the more the toughness is enhanced. Herein, t (mm) is the wall thickness. Measurement is performed using a thickness gage after pipe-making.

PLBZS is defined by the following equation:

$$\text{PLBZS} = 135\text{HI}_1 + 70\text{HI}_2 - 39t - 89R_1 + 81L + 1510 \qquad \text{Equation (6)}$$

where $\text{HI}_1$ (kJ/mm) is the welding heat input of prior welding, $\text{HI}_2$ (kJ/mm) is the welding heat input of subsequent welding, $R_1$ (mm) is the bead width determined at the position 5 mm apart from the tip of the weld bead of prior welding, and L (mm) is the lap of inside and outside weld beads. Incidentally, all shape parameters used to derive PLBZS are determined from a sample in which a surface of a seam weld cut perpendicularly to a weld line direction is revealed with nital or the like. The average prior-austenite grain size of the welded heat-affected zone refers to the average equivalent circle diameter calculated from ten or more prior-austenite grains in contact with a fusion line in a cross section of a weld. When PLBZM and PLBZS are 1,400 or less, the occurrence of weld defects can be prevented and the toughness of a cross bond FL can be ensured. Therefore, the upper limits thereof are 1,400. It is more preferably 1,300 or less.

$\text{CM}_1$ and $\text{CM}_2$: 13 or less
$\text{CS}_1$ and $\text{CS}_2$: 16 or less

All $\text{CM}_1$ (Equation (2)), $\text{CM}_2$ (Equation (3)), $\text{CS}_1$ (Equation (7)), and $\text{CS}_2$ (Equation (8)) are parameters of the toughness of inside and outside FLs. The reduction in average prior-austenite grain size of the welded heat-affected zone or the reduction in the welding heat input and the angle of a fusion line reduces the parameters and enhances the toughness of the inside and outside FLs.

$$\text{CM}_1 = 0.0012(90 - (K_1 + 15))D_1 \qquad \text{Equation (2)}$$

$$\text{CM}_2 = 0.0012(90 - (K_2 + 15))D_2 \qquad \text{Equation (3)}$$

Herein, $K_1$ (°) is the fusion line tilt angle of the weld bead of prior welding and $K_2$ (°) is the fusion line tilt angle of a weld bead of subsequent welding. The fusion line tilt angle is the angle of a fusion line located 6 mm below an inner or outer surface as shown in Fig. 3 when the wall thickness direction is 0°. The reason why a 6 mm position is used is that this position is the thickness-wise center of a test specimen evaluated in DNV-OS-F101 by an inside-outside Charpy test and a value equivalent to the average of inside and outside bead angles is obtained.

$$CS_1 = (90 - (K_1 + 15))HI_1 / t \qquad \text{Equation (7)}$$

$$CS_2 = (90 - (K_2 + 15))HI_2 / t \qquad \text{Equation (8)}$$

Herein, $HI_1$ (kJ/mm) is the welding heat input of prior welding, $HI_2$ (kJ/mm) is the welding heat input of subsequent welding, $R_1$ (mm) is the bead width determined at the position 5 mm apart from the tip of the weld bead of prior welding, L (mm) is the lap of the inside and outside weld beads, t (mm) is the wall thickness, $K_1$ (°) is the fusion line tilt angle of the weld bead of prior welding, and $K_2$ (°) is the fusion line tilt angle of the weld bead of subsequent welding.

When $CM_1$ and $CM_2$ are 13 or less and $CS_1$ and $CS_2$ are 16 or less, the toughness of the inside and outside FLs is extremely enhanced. Therefore, the upper limits of $CM_1$ and $CM_2$ and the upper limits of $CS_1$ and $CS_2$ are 13 and 16, respectively. $CM_1$ and $CM_2$ are more preferably 12 or less and $CS_1$ and $CS_2$ are more preferably 15 or less.

MA area fraction of welded heat-affected zone: 4% or less

The MA area fraction has a significant influence on the welded heat-affected zone toughness. The reduction in the MA area fraction enhances the welded heat-affected zone toughness. However, in order to reduce the MA area fraction, an element added to steel needs to be reduced, which causes decrease in strength of parent material. Therefore, it is allowed up to 4%. It is more preferably 3% or less.

Average prior-austenite grain size of welded heat-affected zone: 400 $\mu$m or less

The average prior-austenite grain size (prior-$\gamma$ grain size) has a significant influence on the welded heat-affected zone toughness. The reduction in the average prior-$\gamma$ grain size enhances the welded heat-affected zone toughness. When the $\gamma$ grain size is more than 400 $\mu$m, desired toughness is not obtained even if the MA area fraction or a factor such as a weld shape is controlled. Therefore, the upper limit is 400 $\mu$m or less. The upper limit is more preferably 250 $\mu$m or less. Incidentally, the term "average prior-austenite grain size" as used herein refers to the average equivalent circle diameter calculated from ten or more prior-austenite grains in contact with a fusion line in a cross section of a weld.

Furthermore, in [2] of the present invention, chemical compositions of steel are specified. Reasons for limiting them are described below.

C: 0.03% to 0.08%

C forms a supersaturated solid solution to contribute to an increase in strength in a low-temperature transformed microstructure. In order to obtain this effect, the addition of 0.03% or more is necessary. However, the addition of more than 0.08% increases the fraction of a second phase formed in a welded heat-affected zone and significantly deteriorates the toughness because a portion thereof is transformed into MA. Therefore, the upper limit is 0.08%.

Si: 0.01% to 0.20%

Si is an element which acts as a deoxidizer and which increases the strength of steel by solid solution strengthening. When the microstructure of a welded heat-affected zone is upper bainite, the formation of martensite-austenite constituent (MA) is promoted and the toughness of the welded heat-affected zone is significantly deteriorated by the effect of delaying the formation of cementite. Si is an element inevitably contained in steelmaking steps and therefore the lower limit is 0.01%. However, in the case of exceeding 0.20%, a large number of the MA is formed in the welded heat-affected zone and therefore the toughness is significantly deteriorated. Therefore, the upper limit is 0.20%. It is more preferably 0.01% to 0.12%. Furthermore, when the toughness needs to be ensured at low temperature, it is preferably reduced to a range of 0.01% to 0.06%.

Mn: 1.0% to 2.2%

Mn acts as a hardenability-enhancing element. Such an effect is obtained by adding 1.0% or more. In the case of using a continuous casting process, the increase in concentration of a central segregation zone is significant and the toughness of a segregation zone is deteriorated by adding more than 2.2%. Therefore, the upper limit is 2.2%.

P: 0.015% or less

P is an element which enhances the strength by solid solution strengthening. However, P deteriorates the toughness or weldability of a parent material and a welded heat-affected zone and therefore, in general, the content thereof is desirably reduced. In the present invention, the formation of micro-segregation is suppressed by reducing P and MAs formed in a welded heat-affected zone are reduced, whereby the toughness of the welded heat-affected zone is enhanced. The effect of reducing P is exhibited by suppressing P to 0.015% or less. Therefore, the upper limit is 0.015%. It is more preferably 0.010% or less.

Al: 0.001% to 0.05%

Al is an element used for deoxidization and 0.001% Al is inevitably contained even if a steelmaking process with any procedures is used. On the other hand, the addition of more than 0.05% reduces the cleanliness of steel to deteriorate the toughness of a parent material and promotes the formation of MAs by the effect of suppressing the formation of cementite to deteriorate the toughness of a welded heat-affected zone. Therefore, the upper limit is 0.05%. It is more preferably 0.001% to 0.035%.

Nb: 0.005% to 0.050%

Nb has the effect of expanding an unrecrystallized austenite region during hot rolling. In particular, in order to keep an unrecrystallized region up to 900°C, the addition of 0.005% or more is necessary. However, the increase in amount of added Nb produces martensite-austenite constituents particularly in a welded heat-affected zone and causes precipitation embrittlement in a reheated welded heat-affected zone during multi-pass welding to significantly deteriorate the toughness. Therefore, the upper limit is 0.050%. Incidentally, the amount of added Nb is preferably low in view of welded heat-affected zone toughness and is more preferably 0.005% to 0.025%.

Ti: 0.005% to 0.030%

Ti forms a nitride and is effective in reducing the amount of solute N in steel. Precipitated TiN suppresses the coarsening of austenite grains in a parent material and a welded heat-affected zone, particularly the austenite grains in the welded heat-affected zone, by a pinning effect during the heating of a slab before hot rolling to contribute to enhancing the toughness of the parent material and the welded heat-affected zone. In order to obtain this effect, the addition of 0.005% or more is necessary. However, the addition of more than 0.030% deteriorates the toughness of the parent material and the welded heat-affected zone because of the precipitation of coarsened TiN or carbides. Therefore, the upper limit is 0.030%.

N: 0.0020% to 0.0080%

N is usually present in steel as an inevitable impurity. N is regulated for the purpose of forming TiN, which suppresses the coarsening of austenite, by adding Ti as described above. In order to obtain a necessary pinning effect, 0.0020% or more needs to be present in steel. However, in the case of exceeding 0.0080%, the deterioration in toughness of a parent material and a welded heat-affected zone is significant due to the increase of solute N. Therefore, the upper limit is 0.0080%.

Ceq: 0.30 to 0.50

Ceq given by Equation (4) below is a parameter for principally evaluating the maximum hardness of a welded heat-affected zone and can also be used as an index for evaluating the strength of a parent material. When Ceq is less than 0.30, any parent material with desired strength cannot be obtained. Therefore, the lower limit is 0.30. However, in the case of exceeding 0.50, it is difficult to ensure the toughness of the welded heat-affected zone. Therefore, the upper limit is 0.50. It is more preferably 0.34 to 0.45.

$$Ceq = C + Mn / 6 + (Cu + Ni) / 15 + (Cr + Mo + V) / 5$$

$$Equation \ (4)$$

where each element symbol in the right-hand side of the equation represents the content (mass percent) thereof.

PMA: 5.0 or less

PMA is a parameter derived from the degree of formation of MAs in a welded heat-affected zone and is preferably low in order to enhance the toughness of the welded heat-affected zone. However, the reduction in PMA reduces the strength of a parent material. Therefore, PMA is preferably allowed up to 5.0 in view of the balance between the strength of the parent material and the toughness of the welded heat-affected zone. It is more preferably 4.5 or less.

$$PMA = 100000(C - 0.0218)(0.2Si + 0.5Al)(2(C + Si / 30 + Mn / 20 + Cu / 20 + Ni / 60 + Cr / 20 + Mo / 15 + V / 10 + 5B) + 2.5Nb)(10 / (50P + 2.5))^{-2} \qquad \text{Equation (5)}$$

where each element symbol in the right-hand side of the equation represents the content (mass percent) thereof. In the present invention, one or more of elements below may be further selectively added in order to ensure the structure or the like.

Cu: 0.10% to 0.50%

The addition of 0.10% or more Cu contributes to enhancing the hardenability of steel. However, the excessive addition thereof deteriorates the toughness of a parent material and a welded heat-affected zone. Therefore, in the case of adding Cu, the upper limit is 0.50%.

Ni: 0.10% to 1.00%

The addition of 0.10% or more Ni contributes to enhancing the hardenability of steel. In particular, the deterioration in toughness due to the addition of a large amount of Ni is low as compared to other elements and Ni is an element which is effective for toughening. However, Ni is an expensive element. The addition of more than 1.00% excessively enhances the hardenability to deteriorate the toughness of a welded heat-affected zone. Therefore, in the case of adding Ni, the upper limit is 1.00%.

Cr: 0.10% to 0.40%

The addition of 0.10% or more Cr contributes to enhancing the hardenability of steel. However, the excessive addition thereof deteriorates the toughness of a parent material and a welded heat-affected zone. Therefore, in the case of adding Cr, the upper limit is 0.40%.

Mo: 0.10% to 0.30%

The addition of 0.10% or more Mo contributes to enhancing the hardenability of steel. However, the increase in amount of added Mo deteriorates the toughness of a high heat input weld and causes precipitation embrittlement in a reheated welded heat-affected zone during multi-pass welding to deteriorate the toughness. Therefore, in the case of adding Mo, the upper limit is 0.30%. The amount of added Mo is preferably low in view of welded heat-affected zone toughness.

V: 0.005% to 0.030%

The addition of 0.005% or more V contributes to enhancing the hardenability of steel. However, the increase in amount of added V causes precipitation embrittlement because V precipitates in a reheated welded heat-affected zone. Therefore, in the case of adding V, the upper limit is 0.030%. Incidentally, the amount of added V is preferably low in view of welded heat-affected zone toughness.

B: 0.0005% to 0.0030%

B is an element which is extremely effective in enhancing the hardenability. The addition of 0.0005% or more B contributes to enhancing the strength of a parent material. However, the addition of more than 0.0030% B promotes the deterioration of toughness or low-temperature weld cracking. Therefore, the upper limit is 0.0030%.

The above are fundamental compositions in the case of limiting compositions. In the case of enhancing the toughness or suppressing the formation of two-dimensional inclusions, one or more of Ca, Mg, a REM, and Zr may be further selectively added.

Ca: 0.0005% to 0.0100%

Ca is an element which is effective in controlling the morphology of sulfides in steel. The addition of 0.0005% or more Ca suppresses the formation of MnS, which has an adverse effect on toughness. However, the addition of more than 0.0100% Ca forms CaO-CaS clusters to deteriorate the toughness. Therefore, in the case of adding Ca, it is 0.0005% to 0.0100%.

Mg: 0.0005% to 0.0100%

Mg forms fine oxides in steel during steelmaking and has a pinning effect to suppress the coarsening of austenite grains particularly in a welded heat-affected zone. In order to obtain a sufficient pinning effect, the addition of 0.0005% or more is necessary. However, the addition of more than 0.0100% reduces the cleanliness of steel to deteriorate the toughness. Therefore, in the case of adding Mg, it is 0.0005% to 0.0100%.

REM: 0.0005% to 0.0200%

The REM is an element which is effective in controlling the morphology of sulfides in steel. The addition of 0.0005% or more of the REM suppresses the formation of MnS which has an adverse effect on toughness. However, the REM is an expensive element and an effect is saturated even if more than 0.0200% is added. Therefore, in the case of adding the REM, it is 0.0005% to 0.0200%.

Zr: 0.0005% to 0.0300%

Zr forms carbonitrides in steel and has a pinning effect to suppress the coarsening of austenite grains particularly in a welded heat-affected zone. In order to obtain a sufficient pinning effect, the addition of 0.0005% or more is necessary. However, the addition of more than 0.0300% significantly reduces the cleanliness of steel to deteriorate the toughness. Therefore, in the case of adding Zr, it is 0.0005% to 0.0300%.

Furthermore, in the present invention, a welding method below is specified in order to obtain the shape of the seam weld and the microstructure of a welded heat-affected zone. Welding wire diameter: at least one first electrode for subsequent submerged arc welding with multiple wire electrodes is a wire with a diameter of 3.5 mm or less Reducing the welding heat input is effective in enhancing the toughness of the welded heat-affected zone. Therefore, a wire with a small diameter is used as a leading electrode for submerged arc welding with multiple wire electrodes, whereby deep penetration is achieved with low heat input and therefore the welding heat input can be reduced. The width of a trailing weld bead does not affect the toughness of the cross bond FL as shown in PLBZM and PLBZS. Therefore, the use of such a small-diameter allows the FL toughness of the trailing bead side to be enhanced without affecting the toughness of the cross bond FL. Such an effect appears clearly when the diameter of the wire is 3.5 mm or less. Therefore, the upper limit is 3.5 mm. It is more preferably 2 mm to 3.5 mm.

Groove shape: the shape of a groove on the side to perform subsequent welding is a double-bevel groove having a surface-side groove angle of 90° or more and a wall thickness center-side groove angle of 60° or less The shape of a groove is an important factor that dominates the shape of a bead. In order to suppress an increase in heat input and in order to increase the tilt angle of an FL, it is effective to use a double bevel groove in which the wall thickness center-side is narrow and the surface-side is wide. They are preferably 60° or less and 90° or more. This allows a desired FL tilt angle to be stably ensured.

The depth of a surface-side groove on the side to perform subsequent welding is preferably one-third or more of the wall thickness
When the depth of the surface-side groove is one-third or more of the wall thickness, the bead shape is more stable and a desired FL tilt angle can be stably ensured.
Since the width of a bead prior to PLBZM or PLBZS affects the toughness of a cross bond FL and therefore cannot be excessively expanded and the application of the double-bevel groove to the previous bead side is insufficiently effective, the double-bevel groove is applied to the subsequent bead side. However, it is more preferred that the double-bevel groove is also applied to the previous bead side.

The welded steel pipe according to the present invention is produced by the above-mentioned method. While a manufacturing method other than SAW welding is not particularly limited, the welded steel pipe is preferably manufactured in such a way that a steel plate is formed into a cylinder by cold working, abutting surfaces are tack-welded, butt-joint welding is performed by the above-mentioned method, and expansion is then performed.

Examples

Slabs containing chemical compositions shown in Table 1 were reheated and were hot-rolled, followed by accelerated cooling, whereby steel plates were manufactured.

[Table 1]

| Chemical compositions (unit: mass percent) | | | | | | | | | | | | | | | | | | | | | |
|---|---|---|---|---|---|---|---|---|---|---|---|---|---|---|---|---|---|---|---|---|---|
| Component No. | C | Si | Mn | P | Al | Cu | Ni | Cr | Mo | Nb | V | Ti | Ca | Mg | REM | Zr | N | Ceq | PMA | Ac1 (°C) | Ac3 (°C) |
| A | 0.039 | 0.08 | 1.56 | 0.004 | 0.030 | 0.28 | 0.28 | 0.15 | 0.18 | 0.022 | 0.005 | 0.010 | 0.0025 | - | - | - | 0.0045 | 0.403 | 1.35 | 728 | 891 |
| B | 0.068 | 0.02 | 1.65 | 0.012 | 0.026 | - | 0.23 | 0.20 | 0.10 | 0.012 | - | 0.011 | - | 0.0010 | - | - | 0.0043 | 0.418 | 2.61 | 730 | 874 |
| C | 0.054 | 0.18 | 1.64 | 0.007 | 0.024 | 0.20 | 0.39 | - | 0.12 | 0.010 | 0.008 | 0.006 | - | - | 0.0090 | - | 0.0030 | 0.392 | 4.35 | 721 | 885 |
| D | 0.050 | 0.10 | 2.05 | 0.011 | 0.035 | - | - | - | 0.12 | 0.036 | - | 0.020 | 0.0015 | - | - | 0.0020 | 0.0060 | 0.416 | 4.11 | 732 | 887 |
| E | 0.058 | 0.15 | 1.80 | 0.008 | 0.002 | - | 0.28 | 0.20 | - | 0.025 | - | 0.009 | - | - | - | - | 0.0035 | 0.417 | 3.48 | 735 | 873 |
| F | 0.058 | 0.10 | 1.65 | 0.017 | 0.026 | 0.28 | 0.18 | - | 0.20 | 0.025 | 0.011 | 0.010 | 0.0010 | - | - | - | 0.0039 | 0.406 | 5.46 | 727 | 886 |
| G | 0.054 | 0.25 | 1.75 | 0.004 | 0.024 | 0.25 | 0.25 | - | 0.10 | 0.024 | - | 0.013 | 0.0015 | - | - | - | 0.0040 | 0.399 | 5.79 | 726 | 887 |
| H | 0.071 | 0.18 | 1.09 | 0.004 | 0.026 | 0.35 | 0.35 | 0.30 | 0.20 | 0.021 | 0.005 | 0.011 | 0.0022 | - | - | - | 0.0040 | 0.400 | 6.65 | 735 | 887 |
| I | 0.065 | 0.06 | 1.56 | 0.003 | 0.026 | 0.10 | 0.35 | 0.15 | 0.15 | 0.028 | - | - | - | - | - | - | 0.0035 | 0.415 | 2.96 | 731 | 878 |

Undefined items are outside the scope of the present invention.

EP 2 764 946 A1

Lateral ends of the steel plates were beveled. Open pipes were manufactured by C pressing, U pressing, O pressing, or tack welding; were seam-welded by submerged arc welding with multiple wire electrodes under conditions shown in Table 2; and were then expanded, whereby welded steel pipes were manufactured. Incidentally, the inner surfaces of all the steel pipes were welded first, and the outer surfaces of all the steel pipes were subsequently welded.

[Table 2]

[Table 2]

| Welding conditions | | | | | | | | | | |
|---|---|---|---|---|---|---|---|---|---|---|
| Steel pipe No. | Component No. | Wall thickness (mm) | Shape of prior-welding groove Shape of subsequent-welding groove | | | | Prior welding | | Subsequent welding | |
| | | | Angle (°) | Depth (mm) | Angle (°) | Depth (mm) | Welding heat input (kJ/mm) | Diameter of first electrode wire (mm) | Welding heat input (kJ/mm) | Diameter of first electrode wire (mm) |
| 1 | A | 33.0 | 90 | 9.0 | 100-50 | 12.5 | 4.2 | 3.2 | 8.1 | 3.2 |
| 2 | A | 28.5 | 90 | 8.5 | 100-50 | 13.0 | 6.1 | 4 | 8.1 | 2.4 |
| 3 | B | 33.0 | 90 | 9.0 | 100-50 | 12.5 | 4.8 | 4 | 7.1 | 2.4 |
| 4 | B | 29.9 | 90 | 9.0 | 35 | 11.5 | 4.5 | 4 | 8.2 | 4 |
| 5 | C | 25.4 | 90 | 6.5 | 110-50 | 10.0 | 4.2 | 4 | 7.0 | 3.2 |
| 6 | D | 38.0 | 70 | 11.5 | 90 | 15.0 | 8.5 | 4 | 9.8 | 4 |
| 7 | E | 33.0 | 90 | 9.0 | 100-50 | 12.5 | 4.8 | 4 | 7.5 | 3.2 |
| 8 | E | 33.0 | 35 | 9.5 | 35 | 10.0 | 8.1 | 4 | 8.4 | 4 |
| 9 | F | 30.9 | 90 | 9.0 | 110-50 | 13.0 | 4.9 | 4 | 6.9 | 2.4 |
| 10 | G | 30.9 | 90 | 9.0 | 110-50 | 13.0 | 4.9 | 4 | 6.9 | 2.4 |
| 11 | H | 30.9 | 90 | 9.0 | 110-50 | 13.0 | 4.9 | 4 | 6.9 | 2.4 |
| 12 | I | 30.9 | 90 | 9.0 | 110-50 | 13.0 | 4.9 | 4 | 6.9 | 2.4 |
| Underlined items are outside the scope of the present invention. | | | | | | | | | | |

A sample was taken from a cross section of each obtained welded steel pipe that was perpendicular to a weld line, was mirror-polished, and was etched using nital, followed by photographing the whole of a weld with a digital camera. The following items were measured from an obtained digital camera photograph: the bead width $R_1$ at a position 5 mm apart from the tip of a weld bead of prior welding, the lap L of inside and outside welds, the fusion line tilt angle $K_1$ of the weld bead of prior welding, and the fusion line tilt angle $K_2$ of a weld bead of subsequent welding. Next, the sample used was electrolytically etched, whereby MA was revealed. A SEM photograph was taken. The area fraction of a white microstructure seen in the photograph was derived by image analysis. Incidentally, a shooting position was a site corresponding to an ICCGHAZ in which the MA formed the most. Furthermore, a viewing surface of the sample was polished again and was etched using picric acid, whereby prior-austenite grains were revealed. A welded heat-affected zone near a fusion line was photographed using an optical microscope. The equivalent circle diameter was calculated from prior-austenite grain boundaries in an obtained photograph by image analysis. Incidentally, shooting positions were set to positions located 6 mm below inner and outer surfaces so as to agree with positions used to evaluate the toughness by a Charpy test.

Charpy V-notch specimens were taken from inside and outside FLs and a cross bond FL out of a weld of each obtained welded steel pipe in accordance with JIS Z 2202 standards as shown in Fig. 1, the inside and outside FLs and cross bond FL being specified in DNV-OS-F101, and were subjected to a Charpy test in accordance with JIS Z 2242 standards. Three of the specimens were measured for absorption energy at -40°C under each condition and the average and the minimum were determined. Incidentally, targets were set to an average of 50 J or more and a minimum of 40 J or more in accordance with DNV-OS-F101.

Table 3 shows the shape of weld beads, the microstructure of welded heat-affected zones, and results of the Charpy test.

[Table 3]

[Table 3]

| Bead shape of welded steel pipe, microstructure, and Charpy test results | | | | | | | | | | | | | | | | |
|---|---|---|---|---|---|---|---|---|---|---|---|---|---|---|---|---|
| Steel pipe No. | Prior welding | | | Subsequent welding | | Lap L (mm) | PLBZS | PLBZM | CS1 | CS2 | CM1 | CM2 | M-A fraction (%) | Charpy absorption energy at -40°C (J) | | |
| | Bead width (mm) | FL tilt angle $K_1$ (°) | Prior-$\gamma$ grain diameter ($\mu$m) | FL tilt angle $K_2$ (°) | Prior-$\gamma$ grain diameter ($\mu$m) | | | | | | | | | Prior welding FL | Subsequent welding FL | Cross bond FL |
| 1 | 5.9 | 3 | 80 | 25 | 153 | 4.9 | 1229 | 947 | 9.2 | 12.3 | 6.9 | 9.2 | 0.6 | 180 | 150 | 101 |
| 2 | 8.4 | 9 | 135 | 20 | 175 | 12 | 2013 | 1665 | 14.1 | 15.6 | 10.7 | 11.6 | 0.5 | 80 | 65 | 22 |
| 3 | 8.2 | 5 | 91 | 22 | 145 | 4.5 | 1003 | 746 | 10.2 | 11.4 | 7.6 | 9.2 | 2.0 | 123 | 115 | 109 |
| 4 | 7.9 | 6 | 109 | 5 | 162 | 5.2 | 1244 | 997 | 10.4 | 19.2 | 9.0 | 13.6 | 1.8 | 136 | 34 | 64 |
| 5 | 8.1 | 6 | 103 | 23 | 168 | 4.6 | 1227 | 953 | 11.4 | 14.3 | 8.5 | 10.5 | 2.9 | 95 | 75 | 69 |
| 6 | 7.9 | 11 | 60 | 15 | 85 | 2.8 | 1385 | 192 | 14.3 | 15.5 | 4.6 | 6.1 | 2.8 | 120 | 85 | 56 |
| 7 | 8.3 | 7 | 140 | 24 | 140 | 4.7 | 1038 | 1002 | 9.9 | 11.6 | 11.4 | 8.6 | 2.5 | 102 | 68 | 67 |
| 8 | 5.6 | 13 | 145 | 16 | 150 | 7.1 | 1981 | 1491 | 15.2 | 15.0 | 10.8 | 10.6 | 2.5 | 101 | 106 | 35 |
| 9 | 7.1 | 4 | 80 | 25 | 129 | 5.5 | 1263 | 854 | 11.3 | 11.2 | 6.8 | 7.7 | 4.5 | 150 | 120 | 30 |
| 10 | 7.6 | 6 | 84 | 24 | 135 | 5.9 | 1251 | 877 | 10.9 | 11.4 | 7.0 | 8.3 | 4.6 | 105 | 27 | 24 |
| 11 | 7.4 | 9 | 89 | 24 | 132 | 5.1 | 1204 | 848 | 10.5 | 11.4 | 7.0 | 8.1 | 5.1 | 95 | 25 | 30 |
| 12 | 7.1 | 8 | 231 | 18 | 320 | 4.9 | 1214 | 2057 | 10.6 | 12.7 | 18.6 | 21.9 | 1.8 | 35 | 18 | 9 |
| Underlined items are outside the scope of the present invention. | | | | | | | | | | | | | | | | |

All examples of the present invention achieved the targets in the Charpy test for the inside and outside FLs and the Charpy test for the cross bond FL. However, comparative examples excluded from the examples of the present invention did not achieve the targets.

Reference Signs List

1    Parent material
2    Weld metal
3    Notch position of weld bond of outside weld
3a   Notch position of weld bond of inside weld
3b   Notch position of weld bond of central zone (t/2)
4    Notch position of Charpy specimen
11   Outer surface of parent material
12   Inner surface of parent material
L    Lap length (mm) of inside and outside weld beads
$K_1$    Fusion line tilt angle (°) of weld bead of prior welding
$K_2$    Fusion line tilt angle (°) of weld bead of subsequent welding

**Claims**

1. A welded steel pipe with excellent welded heat-affected zone toughness, comprising a butt weld formed by prior welding of either an inner surface or an outer surface with a single layer for each of the inner and outer surfaces, wherein in the metallographic structure of a welded heat-affected zone, the martensite-austenite constituent (MA) area fraction is 4% or less, the average prior-austenite grain size is 400 $\mu$m or less, PLBZM calculated by the following equation (1) is 1,400 or less, $CM_1$ calculated by the following equation (2) is 13 or less, and $CM_2$ calculated by the following equation (3) is 13 or less:

$$PLBZM = 1.62D_1t + 0.84D_2t - 39t - 89R_1 + 81L + 1510 \qquad \text{Equation (1)}$$

$$CM_1 = 0.0012(90 - (K_1 + 15))D_1 \qquad \text{Equation (2)}$$

$$CM_2 = 0.0012(90 - (K_2 + 15))D_2 \qquad \text{Equation (3)}$$

where $D_1$ ($\mu$m) is the average prior-austenite grain size of a welded heat-affected zone formed by prior welding, $D_2$ ($\mu$m) is the average prior-austenite grain size of a welded heat-affected zone formed by subsequent welding, $R_1$ (mm) is the bead width determined at a position 5 mm apart from the tip of a weld bead formed by subsequent welding, L (mm) is the lap of inside and outside welds, t (mm) is the wall thickness, $K_1$ (°) is the fusion line tilt angle of a weld bead of prior welding, and $K_2$ (°) is the fusion line tilt angle of a weld bead of subsequent welding.

2. The welded steel pipe with excellent welded heat-affected zone toughness according to Claim 1, wherein the welded steel pipe contains 0.03% to 0.08% C, 0.01% to 0.20% Si, 1.0% to 2.2% Mn, 0.015% or less P, 0.001% to 0.05% Al, 0.005% to 0.050% Nb, 0.005% to 0.030% Ti, and 0.0020% to 0.0080% N and further contains one or more selected from the group consisting of 0.10% to 0.50% Cu, 0.10% to 1.00% Ni, 0.10% to 0.40% Cr, 0.10% to 0.30% Mo, 0.005% to 0.030% V, and 0.0005% to 0.0030% B on a mass basis, the remainder being Fe and inevitable impurities; Ceq given by the following equation (4) satisfies the inequality $0.30 \leq Ceq \leq 0.50$; and PMA given by the following equation (5) is 5.0 or less:

$$Ceq = C + Mn / 6 + (Cu + Ni) / 15 + (Cr + Mo + V) / 5 \qquad \text{Equation (4)}$$

$$PMA = 100000(C - 0.0218)(0.2Si + 0.5Al)(2(C + Si / 30 + Mn / 20 + Cu / 20 + Ni / 60 + Cr / 20 + Mo / 15 + V / 10 + 5B) + 2.5Nb)(10 / (50P + 2.5))^{-2} \qquad \text{Equation (5)}$$

where each element symbol in the right-hand sides of the equations represents the content (mass percent) thereof.

3. The welded steel pipe with excellent welded heat-affected zone toughness according to Claim 2, further containing one or more selected from the group consisting of 0.0005% to 0.0100% Ca, 0.0005% to 0.0100% Mg, 0.0005% to 0.0200% of a REM, and 0.0005% to 0.0300% Zr on a mass basis.

4. A method for manufacturing the welded steel pipe with excellent welded heat-affected zone toughness according to any one of Claims 1 to 3, comprising prior welding of either an inner surface or an outer surface with a single layer for each of the inner and outer surfaces by submerged arc welding with multiple wire electrodes, wherein PLBZS given by the following equation (6) is 1,400 or less, $CS_1$ calculated from the following equation (7) is 16 or less, and $CS_2$ calculated from the following equation (8) is 16 or less:

$$PLBZS = 135HI_1 + 70HI_2 - 39t - 89R_1 + 81L + 1510 \qquad \text{Equation (6)}$$

$$CS_1 = (90 - (K_1 + 15))HI_1 / t \qquad \text{Equation (7)}$$

$$CS_2 = (90 - (K_2 + 15))HI_2 / t \qquad \text{Equation (8)}$$

where, $HI_1$ (kJ/mm) is the welding heat input of prior welding, $HI_2$ (kJ/mm) is the welding heat input of subsequent welding, $R_1$ (mm) is the bead width determined at a position 5 mm apart from the tip of a weld bead of prior welding, L (mm) is the lap of inside and outside weld beads, t (mm) is the wall thickness, $K_1$ (°) is the fusion line tilt angle of the weld bead of prior welding, and $K_2$ (°) is the fusion line tilt angle of a weld bead of subsequent welding.

5. The method for manufacturing the welded steel pipe with excellent welded heat-affected zone toughness according to Claim 4, wherein in submerged arc welding with multiple wire electrodes for the subsequent welding, at least one welding wire with a diameter of 3.5 mm or less is used as a first electrode.

6. The method for manufacturing the welded steel pipe with excellent welded heat-affected zone toughness according to Claim 4 or 5, wherein the shape of a groove on the side to perform the subsequent welding is a double-bevel groove shape having a surface-side groove angle of 90° or more and a wall thickness center-side groove angle of 60° or less.

7. The method for manufacturing the welded steel pipe with excellent welded heat-affected zone toughness according to Claim 6, wherein the depth of a surface-side groove on the side to perform the subsequent welding is one-third or more of the wall thickness.

EP 2 764 946 A1

2   4   11

1

1mm

(outside FL)

(inside FL)   3a

wall thickness: t   1mm

4   12

(a)

2   4   11

1

(cross bond FL)

mid thick.

3b

wall thickness: t   4   12

(b)

**Fig. 1**

30°   30°

**Fig. 2**

6mm   $K_2$

6mm   $K_1$

**Fig. 3**

**INTERNATIONAL SEARCH REPORT**

| | International application No. |
|---|---|
| | PCT/JP2012/006332 |

**A. CLASSIFICATION OF SUBJECT MATTER**
*B23K9/025*(2006.01)i, *B21C37/08*(2006.01)i, *B23K9/18*(2006.01)i, *B23K9/23*
(2006.01)i, *C22C38/00*(2006.01)i, *C22C38/58*(2006.01)i, *B23K101/06*
(2006.01)n, *B23K103/04*(2006.01)n
According to International Patent Classification (IPC) or to both national classification and IPC

**B. FIELDS SEARCHED**

Minimum documentation searched (classification system followed by classification symbols)
B23K9/025, B21C37/08, B23K9/18, B23K9/23, C22C38/00, C22C38/58,
B23K101/06, B23K103/04

Documentation searched other than minimum documentation to the extent that such documents are included in the fields searched
Jitsuyo Shinan Koho     1922-1996    Jitsuyo Shinan Toroku Koho    1996-2012
Kokai Jitsuyo Shinan Koho   1971-2012    Toroku Jitsuyo Shinan Koho    1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-202167 A (JFE Steel Corp.),<br>10 September 2009 (10.09.2009),<br>claims; paragraphs [0017] to [0028], [0032] to<br>[0053], [0055] to [0068]; fig. 2<br>(Family: none) | 1<br>2-7 |
| Y | WO 2010/090349 A1 (JFE Steel Corp.),<br>12 August 2010 (12.08.2010),<br>claims; paragraphs [0040] to [0041]<br>& JP 2010-202976 A     & EP 2395122 A1<br>& CA 2751705 A        & CN 102308013 A<br>& KR 10-2011-0100317 A | 2-7 |
| A | JP 2006-328523 A (Nippon Steel Corp.),<br>07 December 2006 (07.12.2006),<br>entire text; all drawings<br>(Family: none) | 1-3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 November, 2012 (28.11.12) | 11 December, 2012 (11.12.12) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/006332

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-194490 A (Nippon Steel Corp.), 10 July 2002 (10.07.2002), entire text; all drawings (Family: none) | 1-3 |
| A | WO 2006/049036 A1 (Sumitomo Metal Industries, Ltd.), 11 May 2006 (11.05.2006), entire text; all drawings & US 2007/0289655 A1 & CA 2586391 A & CN 101065507 A & RU 2359770 C | 1-3 |

Form PCT/ISA/210 (continuation of second sheet) (July 2009)

**EP 2 764 946 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6328255 A
- JP 10277744 A
- JP 8057642 A
- JP 2003136130 A
- JP 2001113374 A
- JP 2004099930 A
- JP 2006272377 A
- JP 2007268564 A
- JP 2009214127 A
- JP 2009233679 A
- JP 2009241128 A
- JP 2009202167 A